# EUROPÄISCHE PATENTSCHRIFT

(11) **EP 0 699 030 B1**
(45) Veröffentlichungstag und Bekanntmachung des Hinweises auf die Patenterteilung: **23.07.1997**
(21) Anmeldenummer: 94917587.1
(22) Anmeldetag: 06.05.1994
(51) Int. Cl.: A01N 43/80

(54) **MIKROBIZIDE MITTEL**
MICROBICIDES
AGENTS MICROBICIDES

(30) Priorität: 19.05.1993 DE 4316845
(43) Veröffentlichungstag der Anmeldung: 06.03.1996
(73) Patentinhaber: BAYER AG, 51368 Leverkusen (DE)
(72) Erfinder: WACHTLER, Peter, D-51061 Köln (DE); KUGLER, Martin, D-42799 Leichlingen (DE); LEHMANN, Horst-Dieter, D-47829 Krefeld (DE)
(86) Internationale Anmeldenummer: EP9401459
(87) Internationale Veröffentlichungsnummer: WO9426111

(56) Entgegenhaltungen:
- EP-A- 0 166 611
- EP-A- 0 375 367
- EP-A- 0 547 480
- DE-A- 2 723 118
- FR-A- 1 590 662
- FR-A- 2 262 998
- GB-A- 2 011 790
- US-A- 4 165 318
- US-A- 5 021 594

## Beschreibung

Gegenstand der vorliegenden Anmeldung sind mikrobizide Mittel mit verbessertem bakterizidem und fungizidem Wirkspektrum, die als Wirkstoffe ein Isothiazolinonderivat wie z.B. N-Octyl-isothiazolinen (Octhilinone) sowie Benzylalkoholmono(poly)hemiformal (BHF) und gegebenenfalls weitere Mikrobizide enthalten.

BHF hat eine ausgezeichnete Wirkung sowohl gegen grampositive als auch gegen gramnegative Bakterien während die fungizide Wirkung häufig erst bei höheren Konzentrationen erreicht wird, Aufgrund seiner Flüchtigkeit und Wasserlöslichkeit eignet sich BHF nicht als Anstrichfungizid. Als Konservierungsstoff ist BHF grundsätzlich einsetzbar, aufgrund der geringer ausgeprägten Fungizide müssen jedoch häufig Einsatzkonzentrationen im Bereich von ca. 1500 ppm verwendet werden.

Es hat nicht an Versuchen gefehlt, die fungizide Wirksamkeit von BHF durch Zumischen geeigneter Partner zu verbessern. So ergibt die Kombination mit Iodpropargylderivaten wie beispielsweise Iodpropargylbutylcarbamat (IPBC) Wirkstoffkombinationen mit den gewünschten mikrobiziden Eigenschaftsspektrum, es zeigte sich aber, daß solche Gemische eine für die Praxis nicht ausreichende Stabilität aufweisen.

Es wurde nun gefunden, daß Mischungen aus BHF und N-Octyl-isothiazolinon nicht nur stabile Kombinationen darstellen, sondern darüber hinaus ausgeprägte synergistische Effekte auftreten. Daraus folgt, daß die zum Schutz technischer Produkte einzusetzenden Wirkstoffmengen herabgesetzt werden können, was zu einer ökonomischeren Verwendung führt und darüber hinaus einen Beitrag zur erhöhten Sicherheit der Konservierung mit diesen Gemischen darstellt. Grundsätzlich kann festgestellt werden, daß die erfindungsgemäßen Mischungen eine Verbesserung gegenüber dem Stand der Technik darstellen. Bevorzugt konserviert werden mit diesen neuen Zubereitungen funktionelle Flüssigkeiten, die sowohl anfällig für Befall durch Bakterien als auch durch Schimmelpilze und Hefen sind.

Als zu schützende Produkte seien vorzugsweise folgende genannt:
1. Leime und Klebstoffe auf Basis der bekannten tierischen, pflanzlichen oder synthetischen Rohstoffe.
2. Kühlschmierstoffe, die in mineralölbasierte, teilsynthetische oder vollsynthetische Emulsionen oder Lösungen untergliedert werden können.
3. Polymerdispersionen einschl. Biopolymere.
4. Stärkelösungen, -dispersionen oder -slurries oder andere auf Basis von Stärke hergestellte Produkte wie z.B. Druckverdicker.
5. Slurries anderer Rohstoffe wie Farbpigmente (z.B. Eisenoxidpigmente, Rußpigmente, Titandioxidpigmente) oder Slurries von Füllstoffen wie Kaolin oder Calciumcarbonat.
6. Betonadditive beispielsweise auf Basis von Melasse oder Ligninsulfonaten.
7. Bitumenemulsionen.
8. Funktionelle Flüssigkeiten für die Druckindustrie (z.B. Feuchtmittel für den Offset-Druck).
9. Detergentien und Reinigungsmittel für den technischen und Haushaltsbedarf.
10. Mineralöle oder Mineralölprodukte (z.B. Dieselkraftstoffe).
11. Hilfsmittel für die Leder-, Textil- oder fotochemische Industrie.
12. Vor- und Zwischenprodukte der chemischen Industrie, z.B. bei der Farbstoffproduktion und -lagerung.
13. Tinten oder Tuschen.
14. Dispersionsfarben
15. Schlichten und Appreturen
16. Wachs- und Tonemulsion
17. Gelatinezubereitungen
18. Kosmetika

Überraschenderweise zeigen die erfindungsgemäßen mikrobiziden Wirkstoffkombinationen einen ausgeprägten Synergismus, so daß die Anwendungskonzentrationen niedrig gehalten werden können. Insgesamt stellen die neuen mikrobiziden Mittel eine Bereicherung des Standes der Technik dar.

Die Gewichtsverhältnisse von Octhilinone zu BHF können in einem breiten Bereich variiert werden.

In Konservierungstoffen mit breiter antimikrobieller Wirkung (bakterizid und fungizid), die zum Schutz funktioneller Flüssigkeiten dienen, beträgt das BHF/Isothiazolinonverhältnis 100:0 bis 50:50, bevorzugt 99:1 bis 70:30, besonders bevorzugt 99:1 bis 90:10.

Die erfindungsgemäßen Wirkstoffkombinationen weisen eine starke Wirkung gegen Mikroorganismen auf. Die erfindungsgemäßen Wirkstoffkombinationen werden im Materialschutz zum Schutz technischer Materialien insbesondere zum Schutz von wäßrigen funktionellen Flüssigkeiten verwendet; sie sind vor allem wirksam gegen Schimmelpilze, Bakterien, sowie gegen Hefen, Algen und Schleimorganismen. Beispielhaft - ohne jedoch zu limitieren -seien die folgenden Mikroorganismen genannt:

Alternaria wie Alternaria tenuis, Aspergillus wie Aspergillus niger und Aspergillus terreus, Aureobasidium wie Aureobasidium pullulans, Chaetomium wie Chaetomium globosum, Cladosporium wie Cladosporium herbarum, Coniophora wie Coniophora puteana, Gliocladium wie Gliocladium virens, Lentinus wie Lentinus tigrinus, Paecilomyces wie Paecilomyces varioti, Penicillium wie Penicillium brevicaule, Penicillium glaucum und Penicillium pinophilum, Polyporus wie Polyporus versicolor, Sclerophoma wie Sclerophoma pityophila, Streptoverticillium wie Streptoverticillium reticulum, Trichoderma wie Trichoderma viride, Trichophyton wie Trichophyton mentagrophytes;
Escherichia wie Escherichia coli, Pseudomonas wie Pseudomonas aeruginosa, Staphylococcus wie Staphylococcus aureus;
Candida wie Candida albicans.

Die Menge der eingesetzten Wirkstoffkombinationen ist von dem Anwendungsgebiet abhängig. Die optimale Einsatzmenge ist vor der Anwendung jeweils durch Testreihen zu ermitteln. Im allgemeinen ist es jedoch ausreichend 0,01 bis 20 Gew.-%, vorzugsweise 0,05 bis 10 Gew.-%, insbesondere 0,05 bis 2 Gew.-%, der Wirkstoffgemische, bezogen auf das zu schützende Material, einzusetzen.

Die neuen Wirkstoffkombinationen können als solche oder in allgemein üblichen Formulierungen wie Lösungen, Suspensionen, Emulsionen oder Pasten in die wäßrigen funktionellen Flüssigkeiten eingearbeitet werden.

Die genannten Formulierungen werden in an sich bekannter Weise hergestellt, z.B. durch Vermischen der Wirkstoffe mit einem Lösungs-bzw. Verdünnungsmittel, Emulgatoren, Dispergatoren und/oder Binde- oder Fixiermittels, gegebenenfalls Sikkative und UV-Stabilisatoren und gegebenenfalls Farbstoffen und Pigmenten sowie weiteren Verarbeitungshilfsmitteln.

Als Lösungs- bzw. Verdünnungsmittel kommen organischchemische Lösungsmittel oder Lösungsmittelgemische in Frage. Bevorzugt sind dabei alkoholische oder glykolische Lösungsmittel wie Ethylenglykol, Propylenglykol, Dipropylenglykol, Tripropylenglykol, Polyethylenglykole z.B. Polyethylenglykol 200, 300, 400 usw. sowie deren Mono- und Di-Alkylether.

Weiterhin kann als Lösungs- bzw. Verdünnungsmittel Wasser in Frage kommen, gegebenenfalls in Mischung mit einem oder mehreren der üblicherweise verwendeten Lösungs- bzw. Verdünnungsmittel, Emulgatoren und Dispergatoren.

Die Wirksamkeit und das Wirkungsspektrum erfindungsgemäßer Wirkstoffkombinationen bzw. den daraus herstellbaren Mitteln, Konzentraten oder ganz allgemein Formulierungen wird erhöht, wenn gegebenenfalls weitere antimikrobiell wirksame Stoffe, Fungizide, Insektizide oder andere Wirkstoffe zur Vergrößerung des Wirkungsspektrums oder Erzielung besonderer Effekte wie z.B. dem zusätzlichen Schutz vor Insekten zugesetzt werden.

In vielen Fällen erhält man dabei synergistische Effekte, daß heißt, die Wirksamkeit der Mischung ist größer als die Wirksamkeit der Einzelkomponenten. Besonders bevorzugte Mischungspartner sind z.B. die folgenden Verbindungen:
Sulfenamide wie Dichlofluanid, Tolylfluanid, Folpet, Fluorfolpet;
Benzimidazole wie Carbendazim, Benomyl, Fuberidazole, Thiabendazole oder deren Salze;
Thiocyanate wie Thiocyanatomethylthiobenzothiazol, Methylenbisthiocyanat;
quartäre Ammoniumverbindungen wie Benzyldimethyltetradecylammoniumchlorid, Benzyldimethyldodecylammoniumchlorid, Dodecyldimethylammoniumchlorid;
Morpholinderivate wie Tridemorph, Fenpropimorph, Falimorph, 2-(2-Nitrobutyl)-morpholin oder 4,4-(2-Ethyl-2-nitrotrimethylen)-dimorpholin.
Azole wie Triadimefon, Triadimenol, Bitertanol, Tebuconazole, Propiconazole, Azaconazole, Hexaconazole, Cyproconazol, Prochloraz, Bromuconazole;
2-(1-Chlorcyclopropyl)-1-(2-chlorphenyl)-3-(1,2,4-triazol-1-yl)-propan-2-ol;
Iodderivate wie Diiodmethyl-p-tolylsulfon, 3-Iod-2-propinyl-alkohol, 4-Chlorphenyl-3-iodpropargylformal, 3-Brom-2,3-diiod-2-propenylethylcarbonat, 2,3,3-Triiodallylalkohol, 3-Brom-2,3-diiod-2-propenylalkohol, 3-Iod-2-propinyl-n-hexylcarbamat, 3-Iod-2-propinylcyclohexylcarbamat, 3-Iod-2-propinyl-phenylcarbamat;
Phenolderivate wie Tribromphenol, Tetrachlorphenol, 3-Methyl-4-chlorphenol, Dichlorophen, o-Phenylphenol, m-Phenylphenol, p-Phenylphenol, 2-Benzyl-4-chlorphenol;
Bromderivate wie 2-Brom-2-nitro-1,3-propandiol oder 5-Brom-5-nitro-1,3-dioxan;
Isothiazolinone wie N-Methylisothiazolin-3-on, 5-Chloro-N-methyl-isothiazolin-3-on, 4,5-Dichloro-N-octylisothiazolin-3-on;
Benzisothiazolinone, Cyclopentenisothiazolinone;
Pyridine wie 1-Hydroxy-2-pyridinthion (und ihre Na-, Fe-, Mn-, Zn-Salze), Tetrachlor-4-methylsulfonylpyridin;
Oxide wie Tributylzinnoxid, Cu₂O, CuO, ZnO;
Dialkyldithiocarbamate sowie Na- und Zn-Salze von Dialkyldithiocarbamaten, Tetramethylthiuramdisulfid;
Nitrile wie 2,4,5,6-Tetrachlorisophthalodinitril;
Benzthiazole wie 2-Mercaptobenzothiazol;
Chinoline wie 8-Hydroxychinolin und deren Cu-Salze;
Borverbindungen wie Borsäure, Borsäureester, Borax;
Tris-N-(cyclohexyldiazeniumdioxy)-aluminium, N-(Cyclohexyldiazeniumdioxy)-tributylzinn bzw. K-Salze, Bis-N-(cyclohexyldiazeniumdioxy)-kupfer.

Aldehyde wie Formaldehyd oder dessen Depotstoffe wie z.B. Tris-ω-hydroxyethyl-hexahydrotriazin, N-Methylolchloracetamid, Dimethylolharnstof, Dimethyloxazolidin, Methylenbis-1,3-dimethyloxazolidin, Methylenbis-1,3-oxazin, Trisoxymethylmethan, Tetrahydro-1,3,5-thiadiazin-2-thion sowie Glutardialdehyd, Acrolein, Glyoxal.

Iodpropargylakohol und Derivate wie z.B. Ester des Iodpropargylalkohols, insbesondere mit geschützten oder ungeschützten Aminosäuren, Dipeptiden und höheren Peptiden, z.B. I-C≡CCH₂OCH₂OCOCHRNHCO₂C(CH₃)₃.

Ethoxylierte Iodpropargylalkohole wie z.B. I-C≡C-CH₂OCH₂CH₂OH, Triiodallylalkohol.

Mikrobistatisch bzw. mikrobizid wirksame Alkohole, wie z.B. Benzylalkohol, Methanol, Ethanol, Isopropanol, Phenylethylalkohol, 2-Phenoxyethanol, 2-Phenoxy-1-propanol, 3-(4-Chlorphenoxy)-1,2-propandiol, 2,4-Dichlorbenzylalkohol.

Organische Säuren und deren Derivate, wie z.B. Ameisensäure, Essigsäure, Chloressigsäure, Bromessigsäure, Peressigsäure, Propionsäure, Milchsäure, Weinsäure, Zitronensäure, Sorbinsäure, Undecensäure, Benzoesäure; p-Hydroxybenzoesäure und deren Ester, Salicylsäure, Dehydracetsäure, Chloressigsäure.

2-Mercaptopyrin-1-oxid, 2-Mercaptopyridin und deren Salze, 2,2'-Dithiopyridin-1-oxid.

Guaniden-Derivate, wie z.B. Polyhexamethylenbiguanidin-Hydrochlorid, Clorhexidin.

Als Insektizide werden bevorzugt zugesetzt:
Phosphorsäureester wie Azinphos-ethyl, Azinphos-methyl, 1-(4-Chlorphenyl)-4-(O-ethyl,S-propyl)phosphoryloxypyrazol, Chlorpyrifos, Coumaphos, Demeton, Demeton-S-methyl, Diazinon, Dichlorvos, Dimethoate, Ethoprophos, Etrimfos, Fenitrothion, Fenthion, Heptenophos, Parathion, Parathion-methyl, Phosalone, Phoxim, Pirimiphos-ethyl, Pirimiphos-methyl, Profenofos, Prothiofos, Sulfprofos, Triazophos und Trichlorphon; Carbamate wie Aldicarb, Bendiocarb, 2-(1-Methylpropyl)phenylmethylcarbamat, Butocarboxim, Butoxycarboxim, Carbaryl, Carbofuran, Carbosulfan, Cloethocarb, Isoprocarb, Methomyl, Oxamyl, Pirimicarb, Promecarb, Propoxur und Thiodicarb;
Organosiliciumverbindungen, vorzugsweise Dimethyl(phenyl)silyl-methyl-3-phenoybenzylether wie Dimethyl(4-ethoxyphenyl)-silylmethyl-3-phenoxybenzylether oder (Dimethylphenyl)-silyl-methyl-2-phenoxy-6-pyridylmethylether wie z.B. Dimethyl(9-ethoxy-phenyl)-silylmethyl-2-phenoxy-6-pyridylmethylether oder [(Phenyl)-3-(3-phenoxyphenyl)-propyl](dimethyl)-silane wie z.B. (4-Ethoxyphenyl)-[3-(4-fluoro-3-phenoxyphenyl-propyl]dimethylsilan.
Pyrethroide wie Allethrin, Alphamethrin, Bioresmethrin, Byfenthrin, Cycloprothrin, Cyfluthrin, Decamethrin, Cyhalothrin, Cypermethrin, Deltamethrin, Alpha-cyano-3-phenyl-2-methylbenzyl-2,2-dimethyl-3-(2-chlor-2-trifluor-methylvinyl)cyclopropancarboxylat, Fenpropathrin, Fenfluthrin, Fenvalerate, Flucythrinate, Flumethrin, Fluvalinate, Permethrin, Resmethrin und Tralomethrin;
Nitroimine und Nitromethylene wie 1-[(6-Chlor-3-pyridinyl)-methyl]-4,5-dihydro-N-nitro-1H-imidazol-2-amin (Imidacloprid).

Als andere Wirkstoffe kommen in Betracht Algizide, Molluskizide, Wirkstoffe gegen "sea animals", die sich auf z.B. Schiffsbodenanstrichen ansiedeln.

Die zum Schutz der technischen Materialien verwendeten mikrobiziden Mittel enthalten neben den erfindungsgemäßen Wirkstoffkombinationen gegebenenfalls 0,001 bis 10 Gew.-% eines geeigneten weiteren Fungizids, Insektizids oder eines weiteren Wirkstoffs wie oben genannt.

Die erfindungsgemäßen Wirkstoffkombinationen bzw. Mittel ermöglichen in vorteilhafter Weise, die bisher verfügbaren mikrobiziden Mittel durch effektivere und umweltverträglichere zu ersetzen. Sie zeigen eine gute Stabilität und haben vorteilhafter Weise ein breites Wirkungsspektrum.

Mit den erfindungsgemäßen Wirkstoffkombinationen ist es möglich, Dispersionsfarben, funktionelle Flüssigkeiten wie mineralölbasierte Kühlschmierstoffe oder Stärkeslurries für die Papierindustrie sicher gegen Befall durch Bakterien, Schimmelpilze und Hefen zu schützen. Die breite fungizide und bakterizide Wirksamkeit erlaubt es in vielen Fällen, die Konservierung mit geringeren Wirkstoffmengen durchzuführen, als dies mit dem reinen BHF, insbesondere gegen Schimmelpilze, möglich war, da eine ausgeprägte synergistische Wirkung zu beobachten ist.

### Anwendungsbeispiel

Zur Überprüfung der Wirksamkeit der erfindungsgemäßen Wirkstoffkombinationen werden Gemische mit steigenden Gehalten an N-Octyl-isothiazolinon in Benzylalkoholmono(poly)hemiformal hergestellt und hiervon die Bestimmung des MHK-Wertes (MHK = Minimale Hemmkonzentration) durchgeführt. Wie aus den in der Tabelle zusammengefaßten Daten folgt, zeigen diese Gemische gegenüber Benzylalkoholmono(poly)hemiformal eine deutlich verbesserte Wirkung gegen Schimmelpilze und Hefen.

**Tabelle**

| MHK-Werte [mg/L] Benzylalkoholmono(poly)hemiformal (BHF) N-Octyl-isothiazolinongemische (OiT) | | | | | | |
|---|---|---|---|---|---|---|
| | BHF | 1 | 2 | 3 | 4 | 5 |
| Pseudomonas aeruginosa | 150 | 150 | 150 | 200 | 200 | 200 |
| Pseudomonas fluorescens | 100 | 100 | 150 | 150 | 200 | 200 |
| Alculigenes fulcalis | 150 | 100 | 100 | 100 | 150 | 150 |
| Caryne bacterium | 50 | 50 | 50 | 50 | 100 | 100 |
| Rhodotarula rubra | 800 | 200 | 200 | 200 | 300 | 400 |
| Fusarium solani | >800 | 400 | 400 | 400 | 400 | 400 |
| Geotrichum candidum | >800 | 150 | 100 | 150 | 100 | 100 |

| Zusammensetzung | | | | | | |
|---|---|---|---|---|---|---|
| BHF | 100 % | 90 | 80 | 70 | 60 | 50 |
| OiT | - | 2 | 2 | 2 | 2 | 2 |
| Propylenglykol | - | 8 | 18 | 28 | 38 | 48 |

## Patentansprüche

1. Mikrobizide Mittel zum Schutz von technischen Materialien, gekennzeichnet durch einen Gehalt einer Wirkstoffkombination aus Benzylalkoholmono(poly)hemiformal und mindestens einem Isothiazolinonderivat.

2. Mittel gemäß Anspruch 1, dadurch gekennzeichnet, daß das Isothiazolinonderivat das N-Octyl-isothiazolinon ist.

3. Verfahren zum Schutz von technischen Materialien, dadurch gekennzeichnet, daß eine Wirkstoffkombination nach Anspruch 1 in die technischen Materialien eingearbeitet oder auf diese aufgetragen sind.

4. Verfahren gemäß Anspruch 3, dadurch gekennzeichnet, daß die technischen Materialien Anstrichmittel oder funktionelle Flüssigkeiten sind.

5. Verwendung der Wirkstoffkombination nach Anspruch 1 zum Schutz von technischen Materialien.

## Claims

1. Microbicidal compositions for the protection of industrial materials, characterized by a content of an active compound combination of benzyl alcohol mono(poly)hemiformal and at least one isothiazolinone derivative.

2. Compositions according to Claim 1, characterized in that the isothiazolinone derivative is N-octyl-isothiazolinone.

3. Method for the protection of industrial materials, characterized in that an active compound combination according to Claim 1 is incorporated into or applied to the industrial materials.

4. Method according to Claim 3, characterized in that the industrial materials are paints or functional fluids.

5. Use of the active compound combination according to Claim 1 for the protection of industrial materials.

## Revendications

1. Compositions microbicides pour la protection de matières techniques, caractérisées en ce qu'elles contiennent une combinaison de substances actives constituée de mono(poly)hémiformal d'alcool benzylique et d'au moins un dérivé d'isothiazolinone.

2. Compositions selon la revendication 1, caractérisées en ce que le dérivé d'isothiazolinone est la N-octylisothiazolinone.

3. Procédé de protection de matières techniques, caractérisé en ce que l'on incorpore une combinaison de substances actives selon la revendication 1 dans les matières techniques ou on l'applique sur les matières techniques.

4. Procédé selon la revendication 3, caractérisé en ce que les matières techniques sont des peintures ou des liquides fonctionnels.

5. Utilisation de la combinaison de substances actives selon la revendication 1 pour la protection de matières techniques.
